Europäisches Patentamt

European Patent Office

Office européen des brevets

(19)

(11) **EP 0 910 598 B1**

(12) **EUROPEAN PATENT SPECIFICATION**

(45) Date of publication and mention
of the grant of the patent:
**11.05.2005   Bulletin 2005/19**

(51) Int Cl.⁷: **C08G 63/06**, C08L 67/04

(21) Application number: **97928293.6**

(86) International application number:
**PCT/FI1997/000416**

(22) Date of filing: **27.06.1997**

(87) International publication number:
**WO 1998/001493 (15.01.1998 Gazette 1998/02)**

(54) **HIGH IMPACT STRENGTH BIODEGRADABLE MATERIAL**

BIOABBAUBARES MATERIAL MIT HOHER SCHLAGZÄHIGKEIT

MATERIAU BIODEGRADABLE A HAUTE RESISTANCE AUX CHOCS

(84) Designated Contracting States:
**AT BE CH DE DK ES FR GB GR IE IT LI NL PT SE**

(30) Priority: **08.07.1996  FI  962782**

(43) Date of publication of application:
**28.04.1999   Bulletin 1999/17**

(73) Proprietor: **Vivoxid Oy**
**20520 Turku (FI)**

(72) Inventors:
• **HILJANEN-VAINIO, Mari, Pauliina**
**FIN-40400 Jyväskylä (FI)**
• **KYLMÄ, Janne, Matias**
**FIN-00530 Helsinki (FI)**
• **SEPPÄLÄ, Jukka, Veli**
**FIN-00320 Helsinki (FI)**

(74) Representative: **Sundman, Christoffer et al**
**Patent Agents,**
**Seppo Laine Oy,**
**P.O.B. 339**
**00181 Helsinki (FI)**

(56) References cited:
EP-A- 0 710 684        WO-A-93/15787
US-A- 4 045 418        US-A- 5 132 397
US-A- 5 250 584        US-A- 5 412 067
US-A- 5 470 944

• File WPI, Derwent Accession No. 90-182403,
BIOMATERIAL UNIVERS, "Medical Fibrous
Material Used as Suturing Thread - Composed of
Copolymer Comprising Epsilon Caprolactone
Units and Lactide Units"; & JP,A,02 119 866,
(07-05-90) DW9024.

**Description**

The present invention relates to a method according to the preamble of patent claim 9 to manufacture a biodegradable thermoplastic copolyester based polyurethane, as well as elastomeric copolymers according to the preamble of claim 1 prepared by said method, and the use of the said copolymers described in claim 12, especially as an impact strength improving blend component in biodegradable plastics.

According to the method hydroxy acid monomers are first polymerized or copolymerized to a polyester prepolymer of a relatively low molecular weight, and which then is copolymerized with a monomer reactive with the end groups of the prepolymer to produce a product of a high average molecular weight.

There are several application areas for biodegradable polymers and the products based on the same, as examples of which can serve disposable packaging, extrusion coating of paper and paper-board and packing of compostable materials, in which the compostability of the material is an important competitive edge. The high price, however, substantially limits the use of conventional and well-known biodegradable polymers for packaging and other bulk applications. Another important application area of biodegradable polymers is biomedical applications, as examples of which can serve surgical sutures as well as screws and nails for bone fixation.

One very potential group of biodegradable polymers consists of aliphatic polyesters, in which the biodegradability is largely based on ester linkages prone to hydrolysis. These polyesters usually are synthesized from organic hydroxy acids, or alternatively from dicarboxylic acids and diols. To achieve mechanical properties high enough and required for plastic materials with these aliphatic polyesters the average molecular weight of them has to be pretty high, and the most common method to accomplish this, starting from one or several hydroxy acid type monomers, is to prepare the said polymer through the ring opening polymerization mechanism from lactones.

Lactic acid is clearly one of the potential crude materials for such biodegradable polyesters which could become bulk plastics. Production of poly(lactic acid), or in other words polylactide (PLA), through ring opening mechanism using lactic acid as the starting material via the lactide stage, produces a polymer of sufficiently high molecular weight but requires several steps and highly purified crude material, and in every case the total yield of polymer from lactic acid remains very low. As a homopolymer of lactic acid the typical product is well solid but at the same time brittle which means its tensile elongation value being below 5%.

The PLA produced through ring opening has a linear molecular structure and no long chain branching occurs. The rheological properties of melts of linear polyesters are typically such that their use in the most processing methods applying extrusion technique, as blow molding, film blowing and extrusion coating of paper and paper-board, is difficult. The above mentioned methods which require from the polymer material a certain limit clearly exceeding melt strength and elasticity are, however, well-known central processing methods in packaging industry.

Besides the homopolymerization of lactic acid, polyesterifications where lactide is copolymerized with $\varepsilon$-caprolactone through ring opening mechanism are well-known. Thus it has been possible to produce rubbery copolymer products. Their applications in high volume applications are, however, few because the methods are based on lactide intermediate product, and the production of lactide in a large scale is difficult and expensive.

Direct condensation polymerization of aliphatic diols and dicarboxylic acids or organic hydroxy acids polymerized typically produces a number average molecular weight of 10 000 g/mol at highest, and often in an operation of technical and economical feasibility only molecular weights of 2000 - 5000 g/ mol are possible to achieve. The molecular weight of a polymeric material valuable for technical use has, however, in most cases to be several tens of thousands, even hundreds of thousands in g/mol units.

Furthermore, there are in the patent literature well-known methods by which from lactic acid monomers can be produced a thermoplastic poly(ester urethane) of high average molecular weight which also suits for melt processing. Finnish patent application N:o 92 4699 shows a solution according to which the product polymer is produced in two steps so that lactic acid is first directly polymerized to a low molecular weight oligomer, and then said oligomer is copolymerized with diisocyanate to a poly(ester urethane) (PEU) of substantially higher molecular weight.

The aim of the present invention is to accomplish an alternate, more beneficial way to produce for the most part on organic hydroxy acids based polymers of a high enough average molecular weight, which essentially are melt processable and thus easily and economically moldable to wished articles. Furthermore the aim of the invention is to achieve biodegradability of the product which here means that all or almost all hydrolyzable bonds are ester bonds, and the material does not contain free nitrogen containing functional groups.

Still furthermore the aim of the invention is specifically using the above described producing method to achieve mechanically tough but also ductile polymeric products. The wished elasticity, that is: rubbery properties of the products, is reached by finding that it was surprisingly possible in the direct oligomerization of lactic acid (LA) to copolymerize $\varepsilon$-caprolactone (CL) with it to form an oligomer P(LA/CL).

The present invention is based on the finding that to reach elasticity in a as such known two-step polymerization process using short chain organic hydroxy acid as lactic acid oligomerization and chain linking of the functional groups of the oligomers for example by diisosyanates or diepoxides, one can add in the oligomerization stage a flexible main chain in its molecules containing ε-caprolactone. Thus prepared polymer is a copolyester P(LA/CL), and it is then copolymerized to an end product using known linking reagents. The function of CL-structural units in the oligomer is to bring elasticity to the material, to reduce the glass transition temperature of the end product and simultaneously to act as an internal plasticizer. ε-Caprolactone is well-known is biodegradable so that the end product as well obviously is biodegradable.

The polymerization process according to the invention is a process defined in claim 8, with a condensation polymerization mainly consisting of two stages, having as its first stage the production of a prepolymer in which an organic hydroxy acid and ε-caprolactone can in a reasonable time be converted to a linear copolyester having a controlled average molecular weight and containing hydroxyl or carboxyl end groups according to the need, and at the same time keeping the lactide formation from lactic acid at a low level. Some of the essential features of the method are: the relative amounts of the monomers in the reaction mixture, the polymerization temperatures, the temperature profile, the method to remove the condensation water, the types and compounds used as comonomers and catalysts. In the second stage of the method a copolymer of higher molecular weight is produced so that the average molecular weight of the hydroxyl- or carboxyl-terminated prepolymer is increased using difunctional linking agent such as diisocyanate or diepoxy compound. Primary parameters in the second stage are, for example, the polymerization temperatures, the temperature profiles, the linking agent and its concentration (characterized, for example, as a molar ratio of isocyanate and hydroxyl groups in the reaction mixture), the catalysts, and the technical solutions in the polymerization (melt state or solution, way of agitation, etc.). Typically the molar ratio of the linking agent and prepolymer end groups in the reaction mixture thus is around 1:1.

One of the specific aims of the present invention is to remove some of the typical disadvantages of lactic acid based polymers, especially brittleness.

According to the present invention the thermoplastic, melt processable, tough and ductile copolyester based polyurethane is as defined in claim 1, and consists mainly of structural units derived from copolyester oligomers which typically contain lactic acid and ε-caprolactone, and also partially of structural units originating from the linking agent like urethane or epoxy structures. The average molecular weight of the polymer produced according to the invention Mn is typically higher than 10 000 g/mol, the corresponding weight average molecular weight Mw being over 20 000 g/mol, and the broadness of the molecular weight distribution (the ratio Mw/Mn) is greater than 2. Beneficially the number average molecular weight of the polymer product is in the range 10 000 - 200 000 g/mol, most preferably around 15 000 - 100 000 g/mol, the corresponding weight average molecular weight being 20 000 - 1 000 000 g/mol, preferably around 30 000 - 600 000 g/mol, and the broadness of molecular weight distribution in the range of 2 - 20, preferably 3 - 12.

Through selection of process parameters the method according to the invention yields either linear or in a controlled manner branched polymer, and enables the independent control of molecular weight distribution in the product. When using lactic acid the end product properties can be affected through the selection of the stereo form of it, or, on the other hand, the ratio of the stereo forms in a mixture of them.

The intermediate prepolymer product in the production of a high molecular weight elastomeric end product contains structural units derived from organic hydroxy acids, typically lactic acid, as well as structural units containing longer flexible main chain in their molecules, derived from ε-caprolactone. Besides, said prepolymer is end functionalized either with -OH or with -COOH functional groups by adding at the end of the first stage of the polymerization either a diol or an acid anhydride. Through this addition all or almost all the functional end groups of the prepolymer chains are reactive with the linking agent. If one uses as a linking agent like diisocyanate, the -OH end functionality in the prepolymer is needed, whereas with epoxy compounds as linking agents, the -COOH end functionality is suitable. In the method according to the invention the number average molecular weight of the prepolymer is in the range of 500 - 20 000 g/mol, preferably around 1 000 - 8 000 g/mol, and its lactide content is below 10 wt-% and the content of free hydroxy acids is below 10 wt-%.

Through copolymerization of ε-caprolactone to the prepolymer in connection with its production, and by reacting thus produced copolyester prepolymer according to the invention with a difunctional linking agent, a novel, essentially higher molecular weight copolymer is accomplished, e.g., a copolyester based polyurethane, which is shown to possess very favorable properties in various uses of which the following can be mentioned:

- The end product is a mechanically tough and ductile plastic or rubbery material whose typical stress-strain curves are presented, e.g., in the publication: Kylmä, J. and Seppälä, J.V., Synthesis and Characterization of a Biodegradable Thermoplastic Poly(ester-urethane) Elastomer, Macromolecules Vol. 30 (1997) No. 10, pp. 2876-2882, on the page 2880, or more generally in the textbook: Young, R.J. and Lovell, P.A., Introduction to Polymers, 2nd ed., Chapman & Hall, Cambridge UK, 1992, on the page 394.
- The degree of rubbery behaviour is controllable through changes in the starting materials.
- The end product polymer is biodegradable, in other words it degrades in a biological hydrolytic environment by its ester linkages being hydrolyzed typically by action of microorganisms, and thus it is compostable.

- The end product is a melt processable material, and its typical mechanical properties are suitable for several practical applications. As examples of the applications one can mention the following:

  - injection moulded articles
  - thermoformed and blow moulded packages and bottles,
  - the use in extrusion coating of paper and paper board, and the packages, containers, pouches and films prepared from coated paper or paper board.
  - blow molded and flat die films and the packages, pouches and containers prepared therefrom
  - foamed and from foam produced articles
  - fibers and non-woven articles, and
  - the use as a coating or a matrix in products based on controlled release of active agents, for example fertilizers or drugs.

- The crude material cost of the end product is very close to that of the crude material used for the manufacture of the prepolymer, e.g., lactic acid, because in the method according to this invention the monomer conversion to polymer is high, typically more than 95%.

As one of the advantages of the invention can be mentioned as well that in the end products, produced according to the invention, the molecular weight distribution, the amount of long chain branching, and the cross-linking grade can be tailored to wanted levels which leads to a better control of the rheological properties of the polymer melt and thus to wanted elastomeric and rubber technological properties in the product. The presented polymerization process is relatively simple which means, for example, that existing production processes for thermoplastic polyesters can obviously be easily utilized. By the invented method can as well aliphatic as aromatic copolyesters be produced.
The invention is in the continuation more closely explained with a detailed method explanation and application examples.

### The preparation of prepolymer

According to the stoichiometric ratio of the starting monomers, the polyester prepolymer produced typically consists of 80 - 99,9% organic hydroxy acid monomers and 20 - 0,1% from a dicarboxylic acid monomer or a cyclic carboxylic acid anhydride. If desired a carboxyl terminated polyester prepolymer can be prepared also from hydroxyl terminated polyester prepolymer. This kind of situation can be actual if the same prepolymer batch needs to be used in a later stage of the process as well in the production of high molecular copolyesters as in the production of poly (ester-urethane)s. In the production of hydroxyl terminated polyester prepolymer are typically used diols in a relative concentration of 10 - 0%. All the above mentioned per cent fractions are calculated from the total amount of polyester prepolymer.
The monomeric organic hydroxy acids used in the preparation of polyester prepolymer according to the invention, are typically $\alpha$-hydroxy acids, $\beta$-hydroxy acids or lactones. Especially favourable as hydroxy acids here are aliphatic or aromatic $\alpha$ -hydroxy acids, such as L-lactic acid, D-lactic acid or the blend of them ( as examples racemic lactic acid, D,L-lactic acid), glycolic acid, L- and D-mandelic acid, $\alpha$ -hydroxy isobutanoic acid, lactide, or the blends of these, and they are polymerized in a way that the concentration of free hydroxy acid monomers and lactones in the polyester prepolymer is at the highest 10 wt-%. Hydroxy acid monomers can, howerver, also be multifunctional, and as an example of those can be mentioned malic acid.
Several organic hydroxy acids are commercial products and easily available. So, for example, monomeric lactic acid is industrially produced from glucose by fermentation. The lactic acid used for the production of the prepolymer according to the invention needs not to be especially purified but it may contain, for example, reactive sugar residuals.
According to the invention the rubbery toughness of the end product is achieved by adding, in the connection of polyester prepolymer production, to the hydroxy acid monomer or the mixture of them, an appropriate amount, preferably 1 - 80 wt-%, most preferably 2 - 70 wt-%, aliphatic lactone, such as $\epsilon$-caprolactone, which by the method according to the invention surprisingly copolymerizes with the other monomers present to form an oligomer, i.e., a copolyester prepolymer.
The preparation of a polyester prepolymer, as a simple example of which can serve condensation polymerization of lactic acid, can without difficulty be carried out in any apparatus suitable for esterification reactions. In one favourable application this prepolymerization is carried out as a mass polymerization in molten state when the condensing water is easily removable by leading dry inert gas to the polymer melt under agitation. The removal of the condensation water can even be improved by using reduced pressure so that the reactor pressure is reduced preferably stepwise. In the examples below, the polyester prepolymer was produced in laboratory scale using "Rotavapor"-type equipment, in which water removal is continuous.

The polymerization of polyester prepolymer is, as well known, advantageous to carry out catalytically, and according to one specific and preferable way using typical catalysts for polyesterifications, of which examples include alkyl- and alkoxy compounds of tin and titanium, tin (II) or stannous octoate as one example.

The growth rate of average molecular weight in polyesterifications depends on reaction temperature as is well-known. When the polymerization temperature rises above 210 °C, begins the scission of the polymer chains to limit the growth of polymerization rate.

The rate of formation of non-wanted byproduct as lactide from lactic acid increases to a significant level when the reaction temperature exceeds 220 °C. Mainly for these reasons it is beneficial to increase the reaction temperature in the connection of polyester prepolymer production gradually, in such a manner that in the range of 140 - 200 °C the temperature is increased with the rate of 50 °C/h, and in the temperature range of 200 - 300 °C with the rate of 0 - 30 °C/h.

According to one specific application of the invention the polyesterification in the production of polyester prepolymer is started at the temperature of about 160 °C, and the temperature is then increased gradually up to the temperature of 210 °C. The reactor pressure is likewise gradually reduced in the range of 230 - 30 mbar, and the cleavage water condensing during the polycondensation is removed with the aid of dry nitrogen stream continuously. With the above described standard procedure one can produce a polyester prepolymer, having a number average molecular weight typically in the range of 2000 - 8000 g/mol, as an example 6000 g/mol, and a broadness of molecular weight distribution, i.e. polydispersity, of around 1.7.

At the end of the polyesterifications the low molecular weight polymer fraction can be removed from the reaction mixture if so desired by reducing the pressure further, so that the said fraction is distilled away from the reactor in the same manner as condensation water.

**The functionalization and linking of the polyester prepolymer chain ends**

In the polymerization method according to the present invention the end functionalization of the oligomeric polyester prepolymers is done so that the end functionalities at the ends of the polymer chains are converted according to the used linking reactions, in most cases either predominantly to hydroxylic groups or predominantly to carboxylic groups. This kind of end functionalization is as such known technology, and it is described in publications, for example by Härkönen et al. (1) . The well-known aim of the end functionalization hereby is to make the oligomer as reactive as possible taking into account the goal of molecular weight increase through the use of linking agents.

Through the selection of suitable parameters in the polyesterification and the end functionalization, the number average molecular weight of the polyester prepolymer can be adjusted to the range of 500 - 20 000 g/mol, preferred is to adjust it to the range of 1 000 - 8 000 g/mol. Typically the number average molecular weight for the polyester oligomer produced through condensation polymerization is in the range of 2 000 - 5 000 g/mol.

The technology of the linking of the polyester prepolymer, is described in the literature, e.g., in the reference (1) where the hydroxyl group is the functionality in the prepolymer and diisocyanate as the linking agent. When carboxylic acids are used as end functionalization in the prepolymer, a diepoxy compound is a suitable linking agent.

From a prepolymer appropriately terminated according to the invention, and by using a linking agent, it is possible to prepare rather high molecular weight biodegradable polyester copolymers in rather short reaction times. The linking of the prepolymer chains which can also called copolymerization can be carried out in known ways and using conventional equipment; preferentially it can be carried out by mass polymerization in molten state.

In the reaction between the polyester prepolymer and the chain linking agent, i.e., in the copolymerization, the molar ratio of the functional groups of the linking agent and polyester prepolymer end groups is typically in the range of 0.5 - 1.5, preferably in the range of 0.7 - 1.2 and most preferably around 1. The molar ratio of the linking agent functional groups and polyester prepolymer end groups may however be more than 1, preferably in the range of 1.2 - 1.5, in the case a cross-linked end product is wished from the copolymerization. A cross-linked end product may be achieved also by continuing the copolymerization long enough, by copolymerizing at a high enough temperature, and by using a defined catalyst.

The copolymerization of polyester prepolymer and chain linking agent is carried out according to the invention at a temperature of about 110 - 220 °C, preferably at about 130 - 200 °C, and the reaction is continued until the product copolymer is essentially free of the functional groups of the linking agent. It is beneficial to continue the copolymerization until the product copolymer has molecular weight distribution of at least 2, in terms of the ratio of weight and number average molecular weights.

The copolymerization can be carried out according to the existing technology. In a laboratory scale the reaction can be carried out as mass polymerization in a molten state under argon atmosphere, using for example a 300 ml glass reactor. As an agitator one has to use an arrangement that is suitable for viscous masses, like a suitable blade

(1) Härkönen, M., Hiltunen,K., Malin,M., Seppälä, J.V., Properties and polymerization of biodegradable thermoplastic poly(ester-urethane), J.M.S.-Pure Appl. Chem., A32(4), pp. 857 - 862 (1995).

impeller. The reaction temperature is preferably adjusted to the range of 150 - 180 °C. The progress of the reaction can be followed by taking samples from the reactor in certain time intervals, for example in 10 min intervals. The reaction times are typically in the range of 1 min - around 100 h, preferably the copolymerization can be carried out in a time which is in the range about 0,5 - 50 h.

**Properties of the end product**

The number average molecular weight of the linked copolymer according to the invention is in the range of 10 000 - 200 000 g/mol, typically it is around 20 000 - 90 000 g/mol. The molecular weight distributions of polyester copolymers produced from lactic acid or glycolic acid as the crude material are generally broad ( at least more than 2 when the ratio of mass and number average molecular weights is used as a measure), but when the above mentioned monomers are copolymerized in the connection of polyester prepolymer production with other organic hydroxy acids, for example mandelic, $\alpha$-hydroxy isobutanoic or malic acids, also narrow molecular weight distributions can be achieved.

Long chain branching in, and a broad molecular weight distribution of the end product polymer, and especially the increase of the long chain fraction in the polymer, usually has an increasing effect to the melt elasticity and strength. This development of these properties is beneficial especially for processing methods applying melt extrusion technology, such as paper and paper-board coating, and film blowing.

The total concentration of free hydroxy acid monomers and lactide is according to the invention, at highest at the level of 3 wt-%, typically below 1 wt-%.

The end product polymer is well melt processable, and the melt viscosity of it is in the range of 10 - 5 000 Pa*s, typically in the range of 50 - 2 000 Pa*s, measured with a capillary rheometer at a temperature of 200 °C with a shear rate of 200 l/s.

One important prerequisite for the biodegradation is, that the polymer molecules degrade through hydrolysis. The theory that specifically polyesters of lactic acid primarily degrade through hydrolysis, provided, of course, that there is aqueous environment, is widely accepted among the specialists. Hydrolysis is the first prerequisite stage for the biodegradation, after which the microbes, as well known, can much more easily degrade the hydrolytic degradation products of lower molecular weight.

As can be seen later in the experimental results (Example 7), the copolyester based polyurethane according to the invention is hydrolytic degradable.

Mechanical properties are determined for the copolyester based polyurethanes according the invention, and the results are more closely described in Example 6. Generally one can conclude, that the tensile strengths and modulus values ( as Young's modulus ) are very good. One can easily see, that the material stiffness or elasticity and brittleness or softness can be controlled through the selection of the starting materials and the composition of the starting mixture, especially through changing the relative amounts of flexible structural units in the copolyester prepolymer.

**The use of fillers and reinforcements in the biodegradable polyester copolymers, and their use in blends**

These polymers, and so also the copolyester based polyurethanes according to the invention, can in the normal manner be filled or reinforced with fillers or reinforcing agents, in order to improve the heat resistance and/or mechanical properties of the materials or to lower the price. Suitable selections are such well-known fillers as chalk, talc, starch, cellulose, and their derivatives, or any corresponding materials. As reinforcing agents in biodegradable plastics can act, for example, cellulose fibers or hemp, just to mention a few of several suitable.

The rubbery polyester copolymer according to the invention can be used as a blend component to increase ductility and impact strength in other polymers, especially in biodegradable polymers and plastics such as polylactide or in a brittle poly(ester-urethane) described in reference(1). The such use of the copolyester based polyurethane according to the invention is more closely described later in examples 8 and 9.

**End uses of the biodegradable polyester copolymers**

Thanks to the molecular structure containing long chain branches, several of the new polyester copolymers according to the invention are suitable especially well to paper or paper-board extrusion coating in which purpose due to methodological and technical reasons mainly long chain branched low density polyethylene is used today. The latter as such is not biodegradable, as is well known.

The new polymers according to the invention have otherwise, too, a broad range of uses. Due to the good melt processing properties they can be economically used to produce, for example, injection molded parts as well as

(1) Härkönen, M., Hiltunen,K., Malin,M., Seppälä, J.V., Properties and polymerization of biodegradable thermoplastic poly(ester-urethane), J.M.S.-Pure Appl. Chem., A32(4), pp. 857 - 862 (1995).

thermoformed and blow moulded packages, containers, pouches, bottles, and so forth. These polymers can be used as coatings in containers, pouches and films produced from paper or paper-board. They can be converted to blown or cast films which can be converted to packages, pouches and containers. They also can be used in the manufacture of fibres and non-woven fabrics and products, and they can be used for expanded plastics products, cellular plastics, and foams which are suitable, for example, for void fillers in packaging. Furthermore, they are suitable for coatings and matrixes in controlled release applications of pesticides, fertilizers, and drugs.

In the above mentioned and other similar applications the special properties of the new polyester copolymers according to the invention can be utilized. Especially useful is that biodegradability is combined with good mechanical properties.

The following examples and the attached figures illustrate more closely the present invention:

Example 1 (comparative)

**Preparation of a hydroxyl-terminated polyester prepolymer**

To a 2 liter "Rotavapor" rotary evaporator which was used as a reactor was added 450 g L-lactic acid, 15,0 g ε-caprolactone (corresponding 2 mol-% ε-caprolactone in the monomer mixture), 9,4 g 1,4-butanediol and 0,24 g stannous octoate. A stream of dry nitrogen was blown to the reactor and the absolute reactor pressure was reduced to 230 mbar. The reaction vessel was partly submerged into an oil bath with a temperature regulated to 160 °C. The temperature of the oil bath was then raised with a speed of 20 °C/h, and the reaction mixture was stirred by switching on the rotating of the reaction vessel at a speed of 100 l/min. The temperature of the oil bath was let to rise further at an even speed of 5 °C/h to the value 210 °C where it was held until the polymerization was finished. The absolute pressure in the reaction vessel was reduced step-wise with intervals of one hour; the successive pressure readings in mbar were as follows: 230 (start-up) - 180 - 130 - 100 - 80 - 60 - 50 - 40 - 30. The pressure was held at the last mentioned value until the polymerization was finished. The bubbling with nitrogen was continued during the whole polymerization, and the split off water was collected as soon as it was condensed. The total time of polymerization was 16 h.

The molar mass of the prepared polymer was analyzed by a GPC apparatus (GPC = Gel Permeation Chromatography) comparing with polystyrene standards, and the values 7 900 g/mol and 1,5, respectively, were obtained for number average molecular weight and polydispersity. A thermal analysis by DSC (DSC = Differential Scanning Calorimetry) showed that the glass transition temperature of the prepared polymer was 33 °C, and no crystal melting peak could be detected hence the sample can be considered fully amorphous.

Example 2

**Preparation of a hydroxyl-terminated polyester prepolymer**

The polymerization was performed in the equal manner as in Example 1 but adding at the start to the reactor 450 g L-lactic acid, 184,6 g ε-caprolactone (corresponding 20 mol-% in the monomer mixture), 11,5 g 1,4-butanediol and 0,32 g stannous octoate, and using the total polymerization time of 22 h.

The number average molecular weight of the prepared polymer, determined by GPC against polystyrene standards,was 7 900 g/mol, and the polydispersity was 1,5. The glass transition temperature by DSC-analysis was -3 °C, and no crystal melting peak could be detected.

Example 3

**Preparation of a hydroxyl-terminated polyester prepolymer**

The polymerization was performed in the equal manner as in Example 1 but adding at the start to the reactor 180 g L-lactic acid, 672 g ε-caprolactone (corresponding 70 mol-% in the monomer mixture), 12,0 g 1,4-butanediol and 0,43 g stannous octoate, and using 200 °C as the polymerization temperature and the total polymerization time of 16 h.

The number average molecular weight of the prepared polymer, determined by GPC against polystyrene standards,was 5 900 g/mol, and the polydispersity was 2,1. The glass transition temperature by DSC-analysis was -55 °C, and the crystal melting temperature 27 °C.

Preparation of polyester prepolymers and properties of the products are summarized in Table 1 where Example 1 is designated "LACL 5", Example 2 "LACL 6", and Example 3 "LACL 4", respectively.

Example 4 (comparative)

**Preparation of poly(ester-urethane) from a copolymer of ε-caprolactone (CL) and L-lactic acid (L-LA) containing 2 mol-% e-caprolactone. The results of this example are designated "LACL 51" in Table 2 in which preparation conditions and product properties of these poly(ester-urethane)s are collected.**

A 300 ml glass reactor equipped with a blade stirrer was used as polymerization reactor. 40 g polyester prepolymer prepared according to Example 1 was weighed to the reactor. After purging in 15 min with argon the reactor was lowered into a oil bath with a temperature regulated to 150 °C. When the prepolymer was melted (melting took about 20 min) the stirrer was switched on, and after 15 min 2,5 ml hexamethylene diisocyanate (corresponding the mole ratio of isocyanate groups and hydroxyl groups 1:1 in the reaction mixture). The temperature of the oil bath was raised to 180 °C, and the polymerization was continued until the stirrer momentum began to rise, at least as long as, however, that the product polymer not any more contained free isocyanate groups (was confirmed analytically by FTIR-spectrometry (FTIR = Fourier Transform Infrared). The total polymerization time of Example 4 became 65 h.

As a final product a copolyester based polyurethane was obtained in which the number average molecular weight determined by GPC was 69 000 g/mol, weight average molecular weight 307 000 g/mol and polydispersity 4,5. The glass transition temperature (Tg) of the amorphous polymer by DSC was 45 °C.

Example 5

**Preparation of poly(ester-urethane) from a copolymer of L-lactic acid and e-caprolactone containing 20 mol-% ε-caprolactone. The results of this example are designated "LACL 63" in Table 2.**

The polymerization was carried out in the same manner as in Example 4 but as the polyester prepolymer was used a polymer prepared according to Example 2, the added amount 1,6-hexamethylene diisocyanate was 2,3 ml, and the total polymerization time was 70 min.

As a final product a rubbery poly(ester urethane) was obtained in which the number average molecular weight by GPC was 73 800 g/mol, the weight average molecular weight 387 000 g/mol, and polydispersity 5,2. The glass transition temperature (Tg) of the amorphous polymer by DSC was 9 °C.

Preparation conditions and properties of the final product copolyester based polyurethanes are presented in Table 2.

Example 6

**Mechanical properties of the copolyester based polyurethanes**

Mechanical properties of the copolymer based poly(ester urethane)s prepared according to the preceding examples are presented in Table 3.

Example 7

**The copolyester based polyurethanes' capability to degrade by hydrolysis**

The polymer according to Example 5 was hydrolyzed in a test tube at a temperature of 37 °C by water in which the pH-value was buffered to 7,4. Already after one week there was clear signs of hydrolytic degradation visible.

Example 8

**Preparation of an elastomeric copolyester based polyurethane from a copolymer of ε-caprolactone and L-lactic acid containing 50 mol-% the former (i.e., the copolymers designated LACL 11-17 in Table 2), and use of the prepared polymerization product as a toughness and impact strength improver in blends based on the biodegradable poly(ester- urethane) described in reference (1) (designated PEUa) which as itself is brittle by nature and contains long chain branches in its molecules**

The polymerization was done in a way equal to that of Example 4 but using a prepolymer containing 50 mol-% ε-caprolactone as starting material of the second stage, and as a final product a rubbery copolyester based poly-

(1) Härkönen, M., Hiltunen,K., Malin,M., Seppälä, J.V., Properties and polymerization of biodegradable thermoplastic poly(ester-urethane), J.M.S.-Pure Appl. Chem., A32(4), pp. 857 - 862 (1995).

urethane designated P(LA50/CL50)U was obtained. The properties of said final product are presented in Table 2.

To a lactic acid based poly(ester-urethane) with a branched molecular structure which was prepared by polykondensing L-lactic acid with 2 mol-% 1,4-butanediol and by using diisocyanate to link the hydroxyl-terminated prepolymer was added the weight per cent amounts of 5, 10, 15 and 20 an elastic copolyester based polyurethane P(LA50/CL50)U through melt mixing in a Haake Rheomix 600-mixer (temperature 180 °C, mixing time 5 min at a speed of 75 l/min), and as a comparison a through ring-opening polymerization prepared copolymer of L-lactide and ε-caprolactone P(L-LA50/CL50). The thermal analysis (DSC; DMTA= Dynamic Mechanical Thermal Analysis) results and mechanical properties of these blends are presented in Table 4.

The results show that P(LA50/CL50)U was compatible with PEUa and therefore is a very suitable plasticizer. DMTA results indicate only one glass transition temperature (Tg), and in microscopic photographs taken by SEM (SEM= Scanning Electron Microscopy) no distinct particles of the rubbery component can be seen. Hence it is well possible that the blended P(LA50/CL50)U has reacted with the matrix PEUa. When the weight percentage of the modifying component rises the values of modulus and tensile strength for the blend decrease. Charpy impact strength values do not significantly rise until surprisingly at the amount of 20 wt-% of the blended component when Charpy impact strength was impossible to measure at the used conditions. Young's modulus and tensile strength values have, however, by then decreased to a fraction of the values for the unblended matrix.

Example 9

**Preparation of an elastomeric copolyester based polyurethane from a copolymer of ε-caprolactone and and L-lactic acid containing 60 mol-% the former (i.e., the copolymers designated LACL 41-43 in Table 2), and use of the prepared polymerization product as a toughness and impact strength improver in blends based on the linear biodegradable poly(ester- urethane) described in reference 1 (designated PEUb) in which the polymer chain linearity has been achieved by regulating the molar ratio between the reactive groups of the diisocyanate linking agent and the chain end groups of the polyester prepolymer.**

The polymerization was done in a way equal to that of Example 4 but using a prepolymer containing 60 mol-% ε-caprolactone, and as a final product a rubbery copolyester based polyurethane designated P(LA40/CL60)U whose properties approximately correspond to the values presented for LACL 41-43 in Table 2.

To a linear lactic acid based poly(ester-urethane) PEUb which was prepared by polykondensing L-lactic acid with 2 mol-% 1,4-butanediol and by using diisocyanate to link the hydroxyl-terminated prepolymer in such suitably selected molar ratio which produces a linear molecular structure was added without any compatibilizer component the weight per cent amounts of 10, 15 and 20 an elastic copolyester based polyurethane P(LA40/CL60)U through melt mixing in a Haake Rheomix 600-mixer (temperature 180 °C, mixing time 5 min at a speed of 75 1/min), and as a comparison through ring-opening polymerization prepared copolymers of L-lactide and ε-caprolactone designated P(L-LA40/CL60), P(L-LA60/CL40) and P(L-LA80/CL20). The average molecular weights by room temperature GPC, the thermal analysis (DSC, DMTA) results and certain mechanical properties of these blends are presented in Table 5. The results of linear poly(ester-urethane)s impact modified with a commercial non-biodegradable rubber (type SEBS= ethylene/butylene/styrene block copolymer, brand Kraton 1652 from Shell Corp., used weight per cent amounts 5, 10, 15 and 20) are presented for comparison.

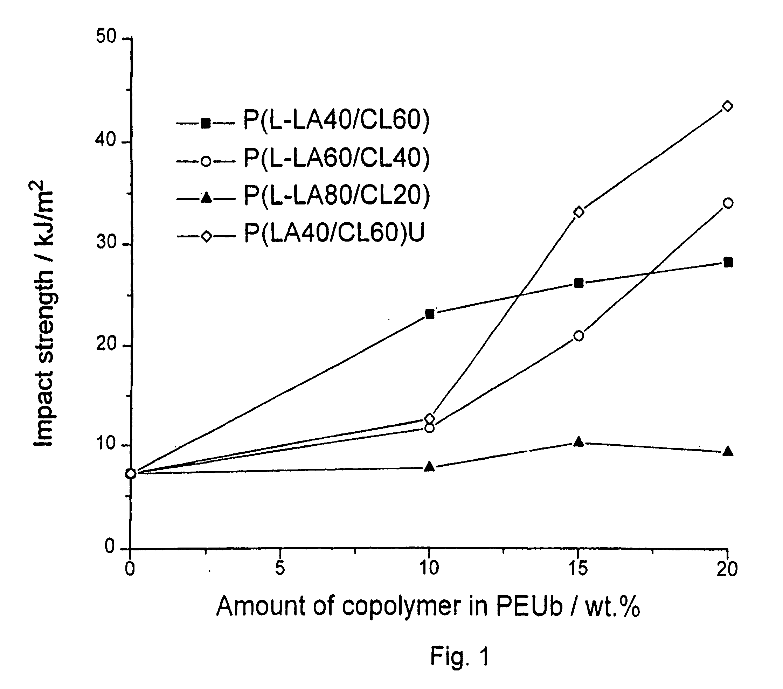

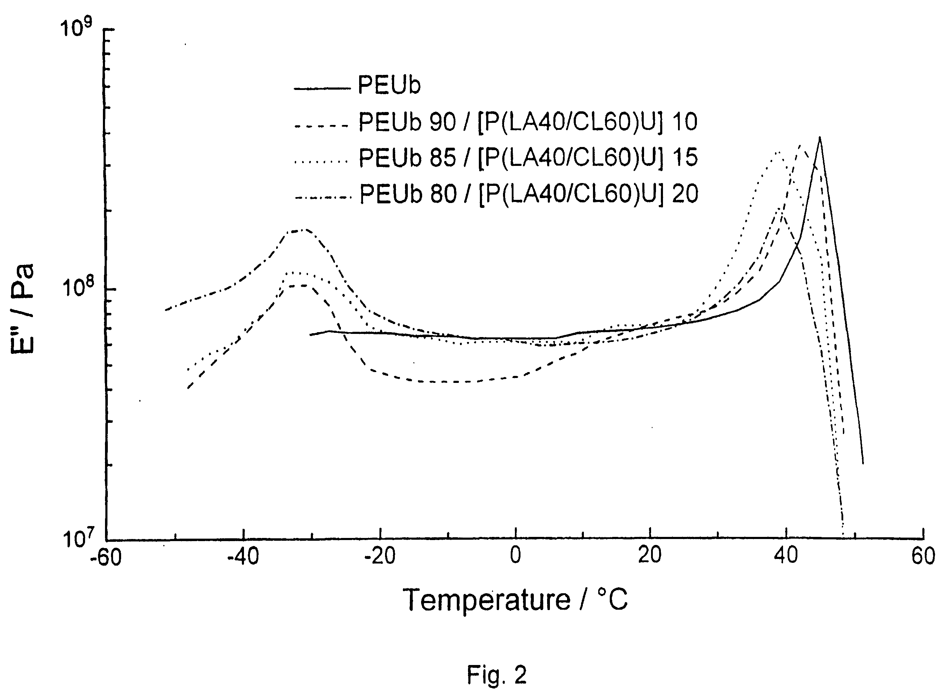

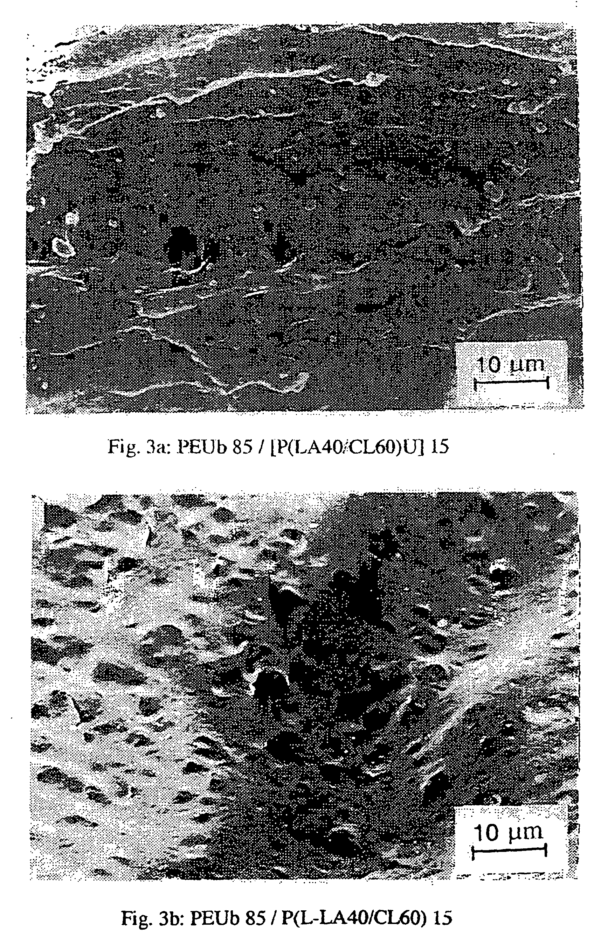

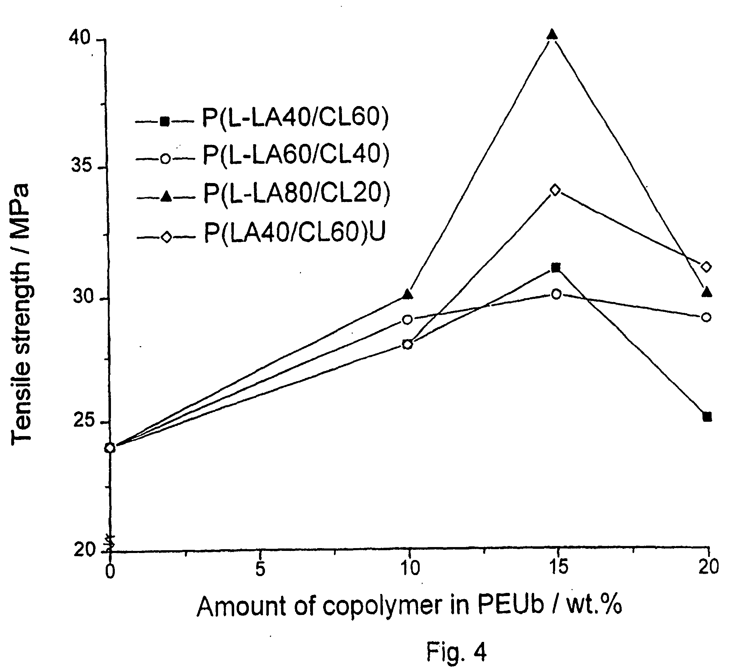

The results show that blending with the rubbery copolyester based polyurethane P(LA40/CL60) significantly improved Charpy impact strength of the linear biodegradable poly(ester-urethane) PEUb, and surprisingly more than blending with the through ring-opening polymerization prepared copolymer of L-lactide and ε-caprolactone having the same comonomer ratio (Fig. 1), and very clearly more than the impact strength improvement of the matrix caused by the used processing. Thermal analysis by DMTA shows two separate loss modulus peaks indicating Tg-values for the PEUb+P(LA40/CL60)U-blends (Fig. 2), and the Tg of the PEUb-phase is slightly shifted towards the Tg the rubbery P(LA40/CL60)-phase indicating partial miscibility of the blend components. In SEM microscopic photographs (Fig. 3a) one can see partickles of the rubbery copolyester based polyurethane (particle size approximately 0,5 - 3,0 μm) which are not as spherical as the particles of the copolyester P(L-LA/CL) having the same comonomer ratio in the same matrix (Fig. 3b). This proves that inner morphology of the copolyester based polyurethane particles and/or their interaction with the matrix surprisingly differ from those of the copolyester particles in the same matrix. Besides, blending with rubbery copolyester based polyurethane clearly improved tensile strength compared with the matrix (Fig. 4), and the Young's modulus of the blend decreased only to the same extent as when blending with a P(L-LA/CL) copolymer having the same comonomer ratio. The impact strength improvement achieved by blending with a rubbery copolyester based polyurethane P(LA40/CL60)U was very clearly greater than the best improvement achieved by blending with a commercial SEBS-type rubber without compatibilizer (i.e., with 5 wt-% of the blending component; Table 5). Besides, blending with SEBS obviously weakens the biodegradability of the blend.

**Table 1.**

| | Monomer composition [a] | | $^{13}$C NMR composition in copolymer | | Polymerization conditions [b] | | GPC | | | DSC | | Acid number | Appearance |
|---|---|---|---|---|---|---|---|---|---|---|---|---|---|
| | L-LA | $\epsilon$-CL | L-LA | $\epsilon$-CL | Time (h) | Temperature (°C) | $\bar{M}_n$ (g/mol) | $\bar{M}_w$ (g/mol) | D | $T_g$ (°C) | $T_m$ (°C) | | |
| LACL 5 | 0,98 | 0,02 | 0,977 | 0,023 | 16 | 210 | 7900 | 11600 | 1,48 | 33 | - | 2 | solid |
| LACL 8 | 0,965 | 0,035 | 0,952 | 0,048 | 24 | 210 | 7800 | 11400 | 1,45 | 28 | - | | solid |
| LACL 7 | 0,95 | 0,05 | 0,936 | 0,064 | 24 | 210 | 7800 | 11700 | 1,49 | 26 | - | 1 | solid |
| LACL 3 | 0,9 | 0,1 | 0,87 | 0,13 | 16 | 200 | 5800 | 9600 | 1,66 | 13 | - | 5 | solid |
| LACL 6 | 0,8 | 0,2 | 0,74 | 0,26 | 22 | 210 | 7900 | 12200 | 1,54 | -3 | - | 3 | pasty |
| LACL 2 | 0,7 | 0,3 | 0,63 | 0,37 | 16 | 200 | 4800 | 9500 | 1,99 | -20 | - | 6 | pasty |
| LACL 1 | 0,5 | 0,5 | 0,41 | 0,59 | 16 | 200 | 5900 | 11600 | 1,95 | -37 | - | 3 | pasty |
| LACL 4 | 0,3 | 0,7 | 0,15 | 0,85 | 16 | 200 | 5900 | 12600 | 2,14 | -55 | 27 | 6 | waxy |

a) 2 mol.% 1,4-butanediol
b) 0,05 wt.% Sn(II)octoate

EP 0 910 598 B1

**Table 2.**

| | Monomer composition | | Diisosyanate | Polymerization conditions | | End-product solubility | GPC | | | DSC | Appearance | Notes |
|---|---|---|---|---|---|---|---|---|---|---|---|---|
| | L-LA | e-CL | | Time | Temperature | Trichloromethan | $\overline{M}_n$ | $\overline{M}_w$ | D | $T_g$ | | |
| | | | (ml) | (min) | (°C) | (+/-) | (g/mol) | (g/mol) | | (°C) | | |
| LACL 51 | 0,98 | 0,02 | 2,5 | 65 | 180 | + | 69 200 | 307 000 | 4,45 | 45 | solid | . |
| LACL 52 | | | 2,7 | 60 | 180 | . | 35 900 | 67 500 | 1,88 | 44 | solid | GPC$_{met, 10 min}$ |
| LACL 81 | 0,95 | 0,05 | 2,5 | 85 | 180 | + | 76 000 | 449 000 | 5,92 | 40 | solid | . |
| LACL 82 | | | 2,7 | 75 | 180 | + | 63 000 | 289 000 | 4,58 | 37 | solid | . |
| LACL 71 | 0,95 | 0,05 | 2,5 | 70 | 180 | + | 60 100 | 270 000 | 4,49 | 35 | solid | . |
| LACL 72 | | . | 2,7 | 65 | 180 | + | 52 400 | 179 000 | 3,41 | 33 | solid | . |
| LACL 31 | 0,9 | 0,1 | 2,7 | 90 | 180 | . | 57 500 | 230 000 | 3,99 | 27 | flexible | GPC$_{met, 13 min}$ |
| LACL 32 | | | 2,5 | 125 | 180 | + | 77 000 | 257 000 | 3,33 | 28 | flexible | . |
| LACL 61 | 0,8 | 0,2 | 2,5 | 80 | 180 | . | 80 600 | 435 000 | 5,41 | 8 | rubery | GPC$_{met, 10 min}$ |
| LACL 62 | | | 2,3 | 65 | 207$_{mix}$ | . | 82 900 | 306 000 | 3,69 | 8 | rubery | GPC$_{met, 13 min}$ |
| LACL 63 | | | 2,3 | 80 | 180 | + | 73 800 | 387 000 | 5,24 | 9 | rubery | . |
| LACL 21 | 0,7 | 0,3 | 2,7 | 90 | 180 | . | 80 600 | 227 000 | 2,82 | -7 | rubery | GPC$_{met, 10 min}$ |
| LACL 22 | | | 2,3 | 130 | 180 | + | 35 000 | 65 000 | 1,86 | nd | pasty | GPC$_{met, 20 min}$ |
| LACL 23 | | | 2,5 | 100 | 180 | + | 50 900 | 121 000 | 2,38 | nd | pasty | GPC$_{met, 13 min}$ |
| LACL 24 | | | 2,9 | 80 | 180 | . | 96 900 | 508 000 | 5,24 | -5 | rubery | GPC$_{met, 10 min}$ |
| LACL 11 | 0,5 | 0,5 | 2,9 | 60 | 180 | . | . | . | . | -27 | rubery | . |
| LACL 12 | | | 2,7 | 100 | 180 | . | 104 000 | 453 000 | 4,36 | -26 | rubery | GPC$_{met, 10 min}$ |
| LACL 13 | | | 2,3 | 90 | 180 | . | 88 700 | 273 000 | 3,08 | -26 | rubery | GPC$_{met, 20 min}$ |
| LACL 14 | | | 2,5 | 65 | 180 | . | 99 100 | 385 000 | 3,88 | -23 | rubery | GPC$_{met, 63 min}$ |
| LACL 16 | | | 2,1 | 80 | 180 | + | 91 000 | 228 000 | 2,50 | -24 | rubery | . |
| LACL 17 | | | 2,3 | 120 | 180 | + | 23 700 | 39 800 | 1,68 | nd | pasty | cat.,GPC$_{met, 10 min}$ |
| LACL 41 | 0,3 | 0,7 | 2,5 | 75 | 180 | + | 82 900 | 415 000 | 5,01 | . | soft | GPC$_{met, 10 min}$ |
| LACL 42 | | | 2,7 | 45 | 180 | + | 54 000 | 265 000 | 4,91 | 16 | soft | GPC$_{met, 13 min}$ |
| LACL 43 | | | 2,9 | 75 | 180 | . | 55 400 | 267 000 | 4,82 | . | soft | GPC$_{met, 30 min}$ |

EP 0 910 598 B1

Table 3.

| Sample | Conditions and method | Tensile modulus (MPa) | Maximum stress (MPa) | Yield stress (MPa) | Maximum strain (%) | Elongation at yield (%) |
|---|---|---|---|---|---|---|
| Poly(ester-urethane) copolymers | | | | | | |
| (98/2) LACL51 | air-conditioned, 1 | 2095±4 | 42,7±0,8 | - | 4,7±1,7 | - |
| LACL52 | air-conditioned, 1 | 2000±23 | 40,7±0.8 | - | 3,6±0,5 | - |
| (96,5/3,5) LACL81 | air-conditioned, 1 | 1724±127 | 36,1±0,9 | - | 6,9±4,6 | - |
| LACL82 | air-conditioned, 1 | 1115±111 | 18,3±1,2 | 9,6±0,2 | 437±20 | 31,5±5,4 |
| (95/5) LACL71 | air-conditioned, 1 | 1297±125 | 22,5±2,7 | 12,3±0.9 | 414±16 | 49±22 |
| (90/10) LACL32 | air-conditioned, 2 | 79±23 | 8,6±0,4 | 1,9±0,1 | 441±38 | 35±10 |
| (80/20) LACL61 | air-conditioned, 2 | 1,6±0,1 | 1,0±0,1 | 0,50±0,04 | 774±84 | 69±11 |
| LACL63 | air-conditioned, 2 | 1,7±0,6 | 0,36±0,01 | 0,33±0,01 | > 1100 | 55±16 |
| (70/30) LACL21 | air-conditioned, 2 | 1,5±0,4 | 0,15±0,01 | 0.12±0.02 | > 1100 | 35±15 |
| LACL24 | air-conditioned, 2 | 1,5±0,2 | 1,60±0,04 | 0,52±0,03 | 898±45 | 84±12 |
| (50/50) LACL16 | air-conditioned, 2 | 1,6±0,3 | 0,14±0,01 | 0,12±0,01 | 733±67 | 33±2 |
| (30/70) LACL41 | air-conditioned, 2 | 5,3±1,4 | 0,09±0,01 | 0,06±0.01 | > 1200 | 16±6 |

Methods: 1) 5 mm/min,

2) 50 mm/min - no yield point

Table 3. (continued)

| Sample | Conditions and method | Tensile modulus (MPa) | Maximum stress (MPa) | Yield stress (MPa) | Maximum strain (%) | Elongation at yield (%) |
|---|---|---|---|---|---|---|
| Homopolymers | | | | | | |
| PEU | air-conditioned | 1927±60 | 46,8±1,8 | - | 3,7±0,3 | - |
| PLLA | dry | 1720±50 | 46,5±1,3 | - | 2.9±0.2 | - |
| | air-conditioned | 1620±70 | 44,5±3,6 | - | 3.0±0.4 | - |
| PDLLA | dry | 1930±80 | 34,5±1,4 | - | 2.0±0.0 | - |
| | air-conditioned | 1540±70 | 33,0±1,8 | - | 2.5±0.1 | - |
| PCL | dry | 250±10 | 15,0±0,3 | 15,0±0,3 | >100 | 20±1 |
| | air-conditioned | 260±3 | 15,5±140 | 16,0±0,2 | >100 | 20±2 |

## Table 4.

| Sample | $T_g$ (DSC) | $T_g$ (DMTA) | Charpy impact strength | Modulus | Tensile strength | Strain at break |
|---|---|---|---|---|---|---|
| (wt.%/wt.%) | (°C) | (°C) | (kJ/m²) | (MPa) | (MPa) | (%) |
| PEUa[1] | 50 | 44 | 6.7 ± 0.5 | 2570 ± 80 | 37 ± 3 | 2.4 |
| PEUa[2] | 52 | 48 | 9.2 ± 0.6 | 2700 ± 50 | 48 ± 1 | 4.2 |
| PEUa 95 / P(L-LA50/CL50) 5 | 49 | 49 | 9.7 ± 1.0 | 2330 ± 150 | 41 ± 2 | 3.3 |
| PEUa 90 / P(L-LA50/CL50) 10 | 52 | 47 | 15.0 ± 3.4 | 2090 ± 150 | 34 ± 2 | 3.6 |
| PEUa 85 / P(L-LA50/CL50) 15 | 48 | (-12)[3] 45 | 26.0 ± 5.1 | 1800 ± 80 | 28 ± 1 | 23.4 |
| PEUa 80 / P(L-LA50/CL50) 20 | 49 | ( -8)[3] 41 | 38.0 ± 1.4 / some[4] | 1530 ± 80 | 25 ± 2 | 29.6 |
| PEUa 95 / [P(LA50/CL50)U] 5 | 47 | 44 | 6.5 ± 1.6 | 2000 ± 290 | 36 ± 5 | 3.3 |
| PEUa 90 / [P(LA50/CL50)U] 10 | 43 | 41 | 9.2 ± 1.5 | 1890 ± 150 | 34 ± 4 | 4.2 |
| PEUa 85 / [P(LA50/CL50)U] 15 | 39 | 33 | 8.9 ± 1.9 | 1730 ± 30 | 30 ± 2 | 8.5 |
| PEUa 80 / [P(LA50/CL50)U] 20 | 34 | 28 | -[4] | 610 ± 200 | 12 ± 3 | >100 |

[1] initial

[2] processed in batch mixer for comparison

[3] the $T_g$ value in parenthesis indicates the small peak in loss modulus induced by the dispersed phase

[4] not broken

EP 0 910 598 B1

Table 5.

| Sample | $\bar{M}_n$ | $\bar{M}_w$ | D | $T_t$ (DMTA) | | Charpy impact strength | Modulus | Tensile strength | Strain at break |
|---|---|---|---|---|---|---|---|---|---|
| (wt.%/wt.%) | (g/mol) | (g/mol) | | (°C) | | (kJ/m²) | (MPa) | (MPa) | (%) |
| PEUb[1] | 54 000 | 91 000 | 1.7 | | 44 | 4.1 ± 0.5 | 2560 ± 90 | 33 ± 4 4 | 1.7 |
| PEUb[2] | 46 000 | 77 000 | 1.7 | | 44 | 7.2 ± 0.2 | 2290 ± 150 | 24 ± 3 | 1.4 |
| PEUb 90 / P (L-LA40/CL60) 10 | 52 000 | 106 000 | 2.0 | (-36)[3] | 45 | 23.0 ± 4.6 | 1970 ± 30 | 28 ± 1 | 2.6 |
| PEUb 85 / P (L-LA40/CL60) 15 | 50 000 | 115 000 | 2.3 | (-34)[3] | 45 | 26.2 ± 8.2 | 1830 ± 130 | 31 ± 2 | 3.4 |
| PEUb 80 / P (L-LA40/CL60) 20 | 63 000 | 132 000 | 2.1 | (-33)[3] | 44 | 28.2 ± 2.0 | 1600 ± 50 | 25 ± 1 | 3.5 |
| PEUb 90 / P (L-LA60/CL40) 10 | 47 000 | 98 000 | 2.1 | | 43 | 11.7 ± 2.0 | 1830 ± 150 | 29 ± 3 | 2.9 |
| PEUb 85 / P (L-LA60/CL40) 15 | 48 000 | 105 000 | 2.2 | | 42 | 20.9 ± 7.8 | 1870 ± 60 | 30 ± 2 | 3.0 |
| PEUb 80 / P (L-LA60/CL*A*0) 20 | 57 000 | 124 000 | 2.2 | | 41 | 34.0 ± 4.3 | 1670 ± 160 | 29 ± 3 | 3.1 |
| PEUb 90 / P (L-LA80/CL20) 10 | 44 000 | 95 000 | 2.2 | | 42 | 7.7 ± 1.3 | 2020 ± 80 | 30 ± 6 | 2.2 |
| PEUb 85 / P (L-LA80/CL20) 15 | 53 000 | 112 000 | 2.1 | | 41 | 10.2 ± 1.9 | 2050 ± 20 | 40 ± 4 | 3.4 |
| PEUb 80 / P (L-LA80/CL20) 20 | 61 000 | 138 000 | 2.3 | | 39 | 9.3 ± 0.8 | 1710 ± 140 | 30 ± 4 | 2.8 |
| PEUb 90 / [P (LA40/CL60)U] 10 | 45 000 | 76 000 | 1.7 | (-31)[3] | 42 | 12.6 ± 5.0 | 1890 ± 30 | 28 ± 1 | 2.0 |
| PEUb 95 / [P (LA40/CL60)U] 15 | 56 000 | 126 000 | 2.2 | (-31)[3] | 39 | 33.1 ± 3.5 | 1730 ± 40 | 34 ± 1 | 3.4 |
| PEUb 80 / [P (LA40/CL60)U] 20 | 59 000 | 114 000 | 1.9 | (-31)[3] | 39 | 43.4 ± 5.7 | 1540 ± 30 | 31 ± 1 | 3.8 |
| PEUb 95 / SEBS 5 | 44 000 | 73 000 | 1.6 | (-56)[3] | 45 | 10.2 ± 4.6 | 2180 ± 30 | 30 ± 3 | 1.9 |

[1] initial

[2] processed in batch mixer for comparison

[3] the $T_g$ value in parenthesis indicates the small peak in loss modulus induced by the dispersed phase

[4] material was too brittle to prepare the samples by the method used

Table 5. (continued)

| Sample | $\overline{M}_n$ | $\overline{M}_w$ | D | $T_t$ (DMTA) | | Charpy impact strength | Modulus | Tensile strength | Strain at break |
|---|---|---|---|---|---|---|---|---|---|
| (wt.%/wt.%) | (g/mol) | (g/mol) | | (°C) | | (kJ/m$^2$) | (MPa) | (MPa) | (%) |
| PEUb 90 / SEBS 10 | 33 000 | 68 000 | 2.1 | (-56)[3] | 45 | 6.9 ± 1.6 | 1730 ± 60 | 25 ± 2 | 2.2 |
| PEUb 85 / SEBS 15 | 44 000 | 74 000 | 1.7 | (-55)[3] | 44 | 4.8 ± 0.8 | 1490 ± 90 | 21 ± 1 | 2.3 |
| PEUb 80 / SEBS 20 | 43 000 | 74 000 | 1.7 | (-55)[3] | 45 | 7.3±1.0 | 1280 ± 50 | 18 ± 1 | 2.3 |

[3] the $T_g$ value in parenthesis indicates the small peak in loss modulus induced by the dispersed phase
[4] material was too brittle to prepare the samples by the method used

## Claims

1. A biodegradable elastic copolymer for the most part consisting of structural units derived from organic hydroxy acids *characterized in that* the oligomeric prepolymer for the preparation of said copolymer is formed mainly by polycondensation of

   - an organic hydroxy acid containing a straight hydrocarbon chain of not more than four carbon atoms in its molecules,
   - epsilon-caprolactone, and
   - a dicarboxylic acid or a diol, and

   the prepolymers are linked together by a linking agent selected from the group consisting of diepoxy compounds and diisocyanates and the molar ratio of the organic hydroxyl acid and the epsilon-caprolactone ranges from 80/20 to 40/60.

2. The copolymer according to claim 1 *characterized in that* the oligomeric prepolymer contains a molar percentage of preferably from 1 to 80, most preferably from 5 to 60, calculated from the total monomer content of the prepolymer, ε-caprolactone.

3. The copolymer according to claim 1 *characterized in that* the final polymerisation product is a tough plastic or a strong rubbery material.

4. The copolymer according to claim 1 *characterized in that* the molecular structure of the final polymerisation product is wholly consisting of straight-chain molecules, or consists partly of branched-chain molecules, or is partially cross-linked.

5. The copolymers according to claim 1 *characterized in that* if the final polymerisation product is partly cross-linked, the cross-linking can be accomplished partially or wholly by melt processing.

6. The copolymers according to claim 1 *characterized in that* the elongation at break of said copolymers are typically from 3 to 500 %, and the tensile strengths of said copolymers are from 5 to 50 Mpa.

7. The copolymers according to claim 1 *characterized in that* said copolymer is biodegradable and hydrolysable

8. A method to in a stepwise manner prepare biodegradable elastic copolymers according to claim 1. *characterized in that*, the preparation is accomplished first by polymerising the monomers by direct polyesterification to a telechelic prepolymer, followed by end-functionalising the prepolymer in a well-known manner so that the end-groups of the end-functionalised telechelic prepolymer are either hydroxyl groups or carboxyl groups, and then, again in the well-known manner, selecting the linking agent from a group consisting of diisocyanates of of diepoxy compounds, linking the resulted prepolymers through other than ester linkages to obtain a copolymer.

9. The use of a copolymer according to claim 1 for applications where strong, tough and/or elastic biodegradable materials are required as in surgery and other medical and therapeutic applications, in hygiene products like bandages and disposable diapers, in controlled release of medicines and other active compounds, in coating of paper or paperboard, in producing of packaging films and other applications in the packaging industry, in production of thermoformed and blow moulded containers, bags and bottles, in producing fibres and non-woven fabrics, and as a component in various coatings, binders and hot-melt adhesives, and as a plasticizer and/or impact strength improver in biodegradable plastics.

10. The use of a copolymer according to claim 1 as a impact strength improver **characterized in that** the percentage by weight of said impact strength improver is preferably 2 to 30, most preferably 5 to 20, calculated from the total weight of the blend.

11. The use of a copolymer according to claim 1 as a impact strength improver for a biodegradable plastic blend wherein said blend is prepared in the molten state at an elevated temperature in a suitable mixing apparatus as a twin-screw extruder.

12. The use of a copolymer according to claim 1 as a impact strength improver for a biodegradable plastic blend wherein the Charpy impact strength of said blend is from 3 to 5 times greater than that of an equal material without the impact strength improver, and the tensile strength and the elongation at break of said blend are greater than those of an equal material without the impact strength improver.

**Patentansprüche**

1. Bioabbaubares elastisches Copolymer, das zum größten Teil aus Struktureinheiten besteht, die sich von organischen Hydroxysäuren ableiten, **dadurch gekennzeichnet, daß** das oligomere Prepolymer zur Herstellung dieses Copolymers hauptsächlich gebildet wird durch Polykondensation von

- einer organischen Hydroxysäure, die eine geradkettige Kohlenwasserstoffkette mit nicht mehr als vier Kohlenstoffatomen in ihren Molekülen enthält,

- $\varepsilon$-Caprolacton, und

- einer Dicarbonsäure oder einem Diol, und

die Prepolymere mittels eines verkettungsmittels, ausgewählt aus der Gruppe bestehend aus Diepoxyverbindungen und Diisocyanaten, miteinander verknüpft werden und das Molverhältnis von der organischen Hydroxysäure und dem $\varepsilon$-Caprolacton im Bereich von 80/20 bis 40/60 liegt.

2. Copolymer nach Anspruch 1, **dadurch gekennzeichnet, daß** das oligomere Prepolymer vorzugsweise 1 bis 80, besonders bevorzugt 5 bis 60 Molprozent $\varepsilon$-Caprolacton enthält, bezogen auf den Gesamtmonomergehalt des Prepolymers.

3. Copolymer nach Anspruch 1, **dadurch gekennzeichnet, daß** das fertige Polymerisationsprodukt ein hochbeanspruchbarer Kunststoff oder ein widerstandsfähiges Kautschukmaterial ist.

4. Copolymer nach Anspruch 1, **dadurch gekennzeichnet, daß** die Molekülstruktur des fertigen Polymerisationsprodukts vollständig aus geradkettigen Molekülen besteht oder teilweise aus verzweigtkettigen Molekülen besteht oder teilweise vernetzt ist.

5. Copolymere nach Anspruch 1, **dadurch gekennzeichnet, daß**, wenn das fertige Polymerisationsprodukt teilweise vernetzt ist, die Vernetzung teilweise oder ganz durch Schmelzverarbeitung erfolgen kann.

6. Copolymere nach Anspruch 1, **dadurch gekennzeichnet, daß** die Reißdehnung der Copolymere üblicherweise zwischen 3 und 500 % liegt und die Zugfestigkeit der Copolymere 5 bis 50 Mpa beträgt.

7. Copolymere nach Anspruch 1, **dadurch gekennzeichnet, daß** das Copolymer bioabbaubar und hydrolysierbar ist.

**8.** Verfahren zur schrittweisen Herstellung bioabbaubarer elastischer Copolymere nach Anspruch 1, *dadurch gekennzeichnet, daß* die Herstellung erfolgt, indem die Monomere zuerst durch direkte Polyveresterung zu einem telechelen Prepolymer polymerisiert werden, das Prepolymer anschließend in an sich bekannter weise so endfunktionalisiert wird, daß die endständigen Gruppen des endfunktionalisierten telechelen Prepolymers entweder Hydroxygruppen oder Carboxylgruppen sind, und dann das Verkettungsmittel, wiederum in an sich bekannter Weise, aus der Gruppe bestehend aus Diisocyanaten oder Diepoxyverbindungen auswählt wird und die erhaltenen Prepolymere anders als durch Esterbindungen unter Erhalt eines Copolymers verkettet werden.

**9.** Verwendung eines Copolymers nach Anspruch 1 für Anwendungen, bei denen widerstandsfähige, hochbeanspruchbare und/oder elastische bioabbaubare Materialien erforderlich sind, wie in der Chirurgie und bei anderen medizinischen und therapeutischen Anwendungen, in Hygieneprodukten wie Binden und Wegwerfwindeln, bei der retardierten Freisetzung von Arzneimitteln und anderen Wirkstoffen, bei der Beschichtung von Papier oder Pappe, bei der Herstellung von Verpackungsfolien und anderen Anwendungen in der Verpackungsindustrie, bei der Produktion von warmgeformten und blasgeformten Behältern, Beuteln und Flaschen, bei der Herstellung von Fasern und Faservliesen und als Bestandteil in verschiedenen Beschichtungen, Bindemitteln und Heißklebern und als Weichmacher und/oder Schlagzähigkeitsverbesserer in bioabbaubaren Kunststoffen.

**10.** Verwendung eines Copolymers nach Anspruch 1 als Schlagzähigkeitsverbesserer, *dadurch gekennzeichnet, daß* der prozentuale Gewichtsanteil des Schlagzähigkeitsverbesserers vorzugsweise 2 bis 30, ganz besonders bevorzugt 5 bis 20 beträgt, bezogen auf das Gesamtgewicht der Mischung.

**11.** Verwendung eines Copolymers nach Anspruch 1 als Schlagzähigkeitsverbesserer für eine bioabbaubare Kunststoffmischung, wobei die Mischung im geschmolzenen Zustand bei erhöhter Temperatur in einer geeigneten Mischapparatur wie einem Doppelschneckenextruder hergestellt wird.

**12.** Verwendung eines Copolymers nach Anspruch 1 als Schlagzähigkeitsverbesserer für eine bioabbaubare Kunststoffmischung, wobei die Charpy-Schlagzähigkeit der Mischung 3- bis 5-mal größer ist als die eines gleichen Materials ohne den Schlagzähigkeitsverbesserer und die zugfestigkeit und die Reißdehnung der Mischung größer sind als die eines gleichen Materials ohne den Schlagzähigkeitsverbesserer.

## Revendications

**1.** Copolymère élastique biodégradable constitué pour la plus grande partie d'unités structurelles dérivées d'acides hydroxy organiques **caractérisé en ce que** le prépolymère oligomère pour la préparation dudit copolymère est formé essentiellement par la polycondensation de

- un acide hydroxy organique contenant une chaîne d'hydrocarbure droite de pas plus de quatre atomes de carbone dans ses molécules,
- une epsilon-caprolactone et
- un acide dicarboxylique ou un diol, et

les prépolymères sont liés ensemble par un agent de liaison sélectionné dans le groupe constitué de composés diépoxy et de diisocyanates et le rapport molaire de l'acide hydroxyle organique et de la epsilon-caprolactone se situe dans la plage de 80/20 à 40/60.

**2.** Copolymère selon la revendication 1 **caractérisé en ce que** le prépolymère oligomère contient un pourcentage molaire de préférence de 1 à 80, de manière préférée entre toutes de 5 à 60, calculé à partir de la teneur totale en monomère du prépolymère, ε-caprolactone.

**3.** Copolymère selon la revendication 1, **caractérisé en ce que** le produit de polymérisation final est un matériau plastique dur ou un matériau caoutchouteux résistant.

**4.** Copolymère selon la revendication 1, **caractérisé en ce que** la structure moléculaire du produit de polymérisation final est totalement constituée de molécules à chaînes droites ou est constituée partiellement de molécules à chaînes ramifiées, ou est partiellement réticulée.

**5.** Copolymères selon la revendication 1 **caractérisés en ce que**, si le produit de polymérisation final est partiellement réticulé, la réticulation peut être obtenue partiellement ou totalement par traitement à chaud.

6. Copolymères selon la revendication 1, **caractérisés en ce que** l'étirement à la rupture desdits copolymères est typiquement de 3 à 500 % et **en ce que** la résistance à la traction desdits copolymères est de 5 à 50 MPa.

7. Copolymères selon la revendication 1, **caractérisés en ce que** ledit copolymère est biodégradable et hydrolysable.

8. Procédé destiné à préparer par étapes des copolymères élastiques biodégradables selon la revendication 1 **caractérisé en ce que** la préparation est mise en oeuvre tout d'abord en polymérisant les monomères par polyestérification directe en un prépolymère téléchélique, suivie d'une fonctionnalisation terminale du prépolymère d'une manière bien connue de sorte que les groupes terminaux du prépolymère téléchélique à fonctions terminales sont soit des groupes hydroxyle ou des groupes carboxyle, puis, encore une fois de manière bien connue, en sélectionnant l'agent de liaison dans un groupe constitué des diisocyanates de composés diépoxy, liant les prépolymères obtenus par des liaisons autres qu'ester afin d'obtenir un copolymère.

9. Utilisation d'un copolymère selon la revendication 1 pour des applications où des matériaux résistants, durs et/ou élastiques sont nécessaires, ainsi que dans des applications de chirurgie ou d'autres applications médicales et thérapeutiques, dans les produits d'hygiène, tels que les bandages et les couches jetables, dans la libération contrôlée de médicaments et d'autres composés actifs, dans le couchage de papier ou de carton, dans la production de films d'emballage et d'autres applications dans l'industrie de l'emballage, dans la production de récipients, sacs et bouteilles thermoformés et moulés par extrusion-soufflage, dans la production de fibres et de tissus non-tissés, et comme composant dans différents revêtements, liants et adhésifs à chaud, et comme un plastifiant et/ou un améliorant de la résistance aux chocs dans les plastiques biodégradables.

10. Utilisation d'un copolymère selon la revendication 1 comme un améliorant de la résistance aux chocs **caractérisée en ce que** le pourcentage en poids dudit améliorant de la résistance aux chocs est de préférence de 2 à 30, de manière préférée entre toutes de 5 à 20, calculé à partir du poids total du mélange.

11. Utilisation d'un copolymère selon la revendication 1 en tant qu'améliorant de la résistance aux chocs pour un mélange plastique biodégradable dans laquelle ledit mélange est préparé à l'état fondu à une température élevée dans un appareil de mélange approprié, tel qu'une extrudeuse à double vis.

12. Utilisation d'un copolymère selon la revendication 1 en tant qu'améliorant de la résistance aux chocs pour un mélange plastique biodégradable dans laquelle la résistance aux chocs Charpy dudit mélange est de 3 à 5 fois supérieure à celle d'un matériau égal sans l'améliorant de la résistance aux chocs et la résistance à la traction, et l'étirement à la rupture dudit mélange sont supérieurs à ceux d'un matériau égal sans l'améliorant de la résistance aux chocs.

Fig. 1

Fig. 2

EP 0 910 598 B1

Fig. 3a: PEUb 85 / [P(LA40/CL60)U] 15

Fig. 3b: PEUb 85 / P(L-LA40/CL60) 15

Fig. 4